# EUROPEAN PATENT APPLICATION

(11) **EP 4 668 863 A1**
(43) Date of publication of application: **24.12.2025**
(21) Application number: 23922659.0
(22) Date of filing: 15.02.2023
(51) Int. Cl.: H04W 36/08, H04W 56/00, H04W 84/06

(54) **TERMINAL DEVICE AND BASE STATION DEVICE**

(71) Applicant: FUJITSU LIMITED, Kawasaki-shi, Kanagawa 211-8588 (JP)
(72) Inventor: UEMURA Katsunari, Kawasaki-shi, Kanagawa 211-8588 (JP); SHIMOMURA Tsuyoshi, Kawasaki-shi, Kanagawa 211-8588 (JP)
(74) Representative: Haseltine Lake Kempner LLP
(86) International application number: PCT/JP2023/005108
(87) International publication number: WO 2024/171320

(57) **Abstract**

A terminal apparatus capable of communicating with a first cell and a second cell in non-terrestrial networks, the terminal apparatus includes, a receiver which receives control information from the first cell when the terminal apparatus is connected to the first cell, and a processor which executes, when the control information includes information indicating that switching from the first cell to the second cell occurs and information indicating that the first cell and the second cell have same physical cell IDs, resynchronization processing of downlink timing of the second cell and resynchronization processing of uplink timing of the second cell on a basis of information related to a radio resource included in the control information received from the first cell.

## Description

### TECHNICAL FIELD

The present invention relates to a terminal apparatus, a base station apparatus, and a cell switching control method.

### BACKGROUND ART

In the 3rd generation partnership project (3GPP) which is a standardization project, technical specifications for communication standards satisfying requirements of enhanced mobile broadband (eMBB), massive machine type communications (MTC), and ultra-reliable and low latency communication (URLLC) have been studied as new radio (NR (also referred to as "5G")) which is the fifth generation mobile communication.

In the 3GPP, a technique of enabling communication even in an area such as a mountain area or a sea area by applying NR to non-terrestrial networks (NTN) has been studied (for example, Non-Patent Literatures 1 to 3).

In the non-terrestrial networks (NTN), a flying object (for example, an artificial satellite (in particular, in non-geostationary orbit (NGSO))) operating as a relay station flies through the sky at a high speed. Therefore, unlike terrestrial networks (TN), the communicable area (cell or NTN cell) may be switched even in a case where the terminal apparatus is not moving.

### CITATION LIST

### NON-PATENT LITERATURE

Non-Patent Literature 1: 3GPP TR 38.821 V16.1.0(2021-05)
Non-Patent Literature 2: R2-2211316https://www.3gpp.org/ftp/tsg_ran/WG2_RL2/TSGR2_120/Docs
Non-Patent Literature 3: R2-2211574https://www.3gpp.org/ftp/tsg_ran/WG2_RL2/TSGR2_120/Docs

### SUMMARY OF INVENTION

### PROBLEMS TO BE SOLVED BY THE INVENTION

When the NTN cell is switched, the terminal apparatus performs cell reselection or handover. Therefore, in non-terrestrial networks (NTN), the usage of radio resources and/or the power consumption of the terminal apparatus related to signaling are likely to be higher compared to in terrestrial networks (TN).

This problem can be alleviated, for example, by assigning the same physical cell identifier (PCI: Physical Cell ID) to cells formed in the same area by different flying objects. However, a specific procedure related to switching between cells to which the same physical cell identifier is assigned has not been determined so far. Therefore, the efficiency related to mobility control may decrease in the non-terrestrial networks.

An object according to one perspective of the present invention is to improve efficiency of movement control related to radio communication between a terminal apparatus and a base station apparatus in non-terrestrial networks.

### MEANS FOR SOLVING THE PROBLEMS

A terminal apparatus according to one aspect of the present invention can communicate with a first cell and a second cell in non-terrestrial networks. The terminal apparatus includes, a reception unit which receives control information from the first cell when the terminal apparatus is connected to the first cell; and a processing unit which executes, when the control information includes information indicating that switching from the first cell to the second cell occurs and information indicating that the first cell and the second cell have same physical cell IDs, resynchronization processing of downlink timing of the second cell and resynchronization processing of uplink timing of the second cell on a basis of information related to a radio resource included in the control information received from the first cell.

A base station apparatus according to one aspect of the present invention forms a first cell and a second cell in non-terrestrial networks. The base station apparatus includes, a reception unit which receives, when the first cell and the second cell have same physical cell IDs, capability information from a terminal apparatus, the capability information indicating that it is possible to acquire resynchronization of downlink timing of the second cell and resynchronization of uplink timing of the second cell without executing a handover procedure from the first cell to the second cell; a processing unit which generates, when switching from the first cell to the second cell occurs, control information indicating that the first cell and the second cell have the same physical cell IDs in order to cause the terminal apparatus to acquire the resynchronization of the downlink timing of the second cell and the resynchronization of the uplink timing of the second cell, without executing the handover procedure from the first cell to the second cell; and a transmission unit which transmits the control information to the terminal apparatus in response to the reception of the capability information by the reception unit, and transmits, to the terminal apparatus, second control information indicating that the switching from the first cell to the second cell occurs.

### ADVANTAGEOUS EFFECTS OF THE INVENTION

According to the above-described aspect, the efficiency of movement control related to radio communication between a terminal apparatus and a base station apparatus is improved in non-terrestrial networks.

### BRIEF DESCRIPTION OF DRAWINGS

FIG. 1 illustrates a configuration example of a radio communication system according to an embodiment of the present invention.
FIG. 2 illustrates an example of a functional configuration of the terminal apparatus 10 according to the embodiment.
FIG. 3 illustrates an example of a functional configuration of the base station apparatus according to the embodiment.
FIGs. 4A to 4C illustrate examples of communication areas made by flying objects in non-terrestrial networks.
FIG. 5 illustrates an example of a scenario in which the gateway apparatus is not changed during cell switching.
FIG. 6 illustrates an example of a sequence related to the cell switching.
FIG. 7 illustrates an example of a sequence of transmitting the cell switching notification information using the RRC message.
FIG. 8 illustrates an example of a hardware configuration of the terminal apparatus.
FIG. 9 illustrates an example of a hardware configuration of the base station apparatus.

### DESCRIPTION OF EMBODIMENTS

Hereinafter, embodiments of the present invention will be described in detail with reference to the drawings. Problems and embodiments in the present specification are merely exemplary and do not limit the claims of the present application. In particular, even if the expressions disclosed are different, the technique of the present application can be applied as long as the expressions are technically equivalent, and the claims are not limited. The embodiments can be appropriately combined as long as there are no contradictions in their processing contents.

A known technique may be appropriately used for a radio communication system according to an embodiment of the present invention. The applicable known technique may be, for example, 5G (NR), Beyond 5G, or other radio communication methods. The radio communication system according to the embodiment of the present invention is for NR, but is not limited thereto. For example, the embodiment of the present invention is also applicable to LTE and LTE-Advanced. In addition, the embodiment of the present invention is also applicable to a radio communication system using NR as a part of the radio communication system. Furthermore, the embodiment of the present invention is applicable to any radio communication system including at least a terminal apparatus and a base station apparatus, and is also applicable to future radio communication systems. In the following description, LTE and LTE-Advanced are also referred to as evolved universal terrestrial radio access (E-UTRA), and the meanings thereof are the same.

Hereinafter, embodiments of a base station apparatus, a gateway, a terminal apparatus, and a radio communication system disclosed in the present application will be described with reference to the drawings. Note that the following embodiments do not limit the disclosed techniques.

### <Radio Communication System>

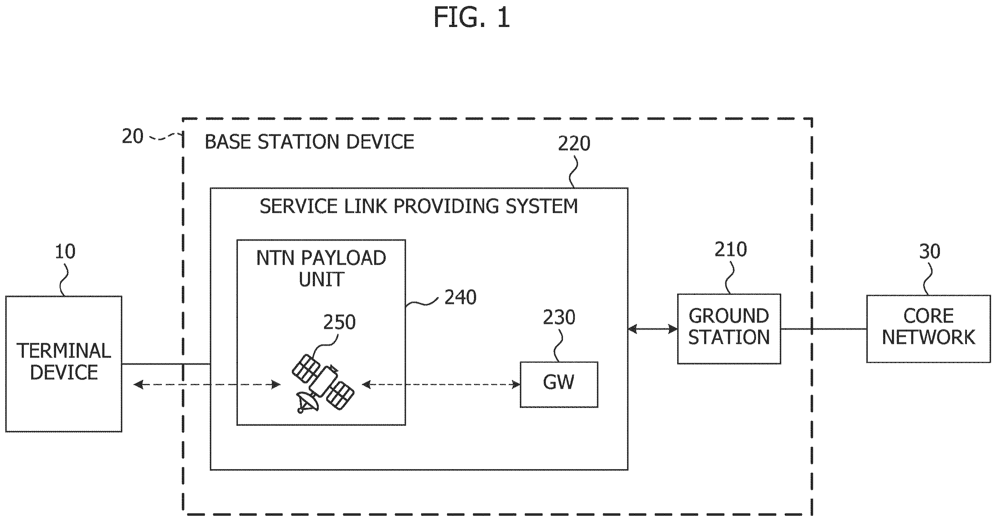

FIG. 1 illustrates a configuration example of a radio communication system according to an embodiment of the present invention. The radio communication system according to the embodiment includes, for example, one or more terminal apparatuses 10, a base station apparatus 20, and a core network 30.

The terminal apparatus 10 may be, for example, a radio terminal of various devices and instruments (sensor devices and the like) having a radio communication function, such as mobile phones, smartphones, personal digital assistants (PDAs), tablets, wearable terminals, personal computers, and vehicles. In addition, the terminal apparatus 10 may be referred to as a radio communication apparatus, a communication apparatus, a reception apparatus, a mobile station, a user equipment (UE), a user device, or the like.

A radio communication service is provided to the terminal apparatus 10 by the base station apparatus 20 and the core network 30 in the radio communication system. The core network 30 has functions such as management of service subscriber information, session management of voice calls and the like, and registration and management of the location of the terminal apparatus 10. Further, the core network 30 transmits control data and/or user data to the terminal apparatus 10 via the base station apparatus 20.

The core network 30 may be a 5G core (5GC) in 5G (NR) or an evolved packet core (EPC) in 4G (E-UTRA). In addition, a connection method between the core network 30 and the base station apparatus 20 may be a non-stand alone (NSA) scheme or a stand alone (SA) scheme.

A 5G base station apparatus 20 connected to the 5GC is a gNB, and a 4G base station apparatus 20 connected to the EPC is an eNB. In addition, 5G base station apparatuses are connected by an Xn interface, and 4G base station apparatuses are connected by an X2 interface.

An area (cover area) formed by the base station apparatus 20 may be referred to as a "cell". E-UTRA and 5G are cellular communication systems constructed by a plurality of cells. For the radio communication system according to the embodiment of the present invention, either a time division duplex (TDD) scheme or a frequency division duplex (FDD) scheme may be applied, or a different scheme may be applied for each cell.

The base station apparatus 20 in the NTN includes an existing base station apparatus (that is, a base station apparatus in the terrestrial networks) and a service link providing system 220. In the following description, the base station apparatus in the terrestrial networks may be referred to as a "ground station 210". That is, the base station apparatus 20 is substantially realized by a base station system including a plurality of apparatuses.

The service link providing system 220 includes a gateway apparatus (GW) 230 and an NTN payload unit 240. The gateway apparatus 230 can communicate with a flying object 250. The flying object 250 is, for example, an unmanned aircraft such as a high altitude platform station (HAPS) or a spacecraft such as an artificial satellite, and includes at least the NTN payload unit 240. The flying object 250 can operate as a repeater (relay station). That is, the flying object 250 transfers a signal received from the gateway apparatus 230 to the terminal apparatus 10, and transfers a signal received from the terminal apparatus 10 to the gateway apparatus 230. The NTN payload unit 240 may include some functions of the ground station 210. In addition, in the following description, the artificial satellite may be simply abbreviated as a "satellite", but its meaning, function, and role remain the same unless otherwise noted.

A communication path between the gateway apparatus 230 and the NTN payload unit 240 may be referred to as a "feeder link". A communication path between the NTN payload unit 240 and the terminal apparatus 10 may be referred to as a "service link". The communication scheme used for the feeder link is not limited to NR, and any communication scheme can be used.

The base station apparatus 20 may be configured separately into a centralized unit (CU) and a distributed unit (DU). The CU is connected to the core network, and the DU is connected to the terminal apparatus 10. In this case, a communication path between the CU and the DU is realized by, for example, a fronthaul interface (F1 interface). In addition, a plurality of DUs may be connected to one CU.

In the example illustrated in FIG. 1, the data (DL data, downlink data) which is transmitted from the core network 30 to the terminal apparatus 10 is transmitted from the core network 30 to the ground station 210 of the base station apparatus 20. The ground station 210 transmits the received data from the gateway apparatus 230 to the flying object 250 using the feeder link. The flying object 250 transmits (transfers) the radio signal received from the ground station 210 to the terminal apparatus 10 using the service link. That is, the flying object 250 operates as a repeater.

The data (UL data, uplink data) which is transmitted from the terminal apparatus 10 to the core network 30 is transmitted from the terminal apparatus 10 to the flying object 250 of the base station apparatus 20 using the service link. The flying object 250 operates as a repeater, and transmits (transfers) the received radio signal to the gateway apparatus 230 using the feeder link. The gateway apparatus 230 transmits the received radio signal to the ground station 210. The ground station 210 transmits the received data to the core network 30.

The terminal apparatus 10 and the base station apparatus 20 transmit and receive an RRC message (also referred to as RRC signaling) in a radio resource control (RRC) layer. In addition, the terminal apparatus 10 and the base station apparatus 20 transmit and receive a MAC control element (MAC CE) in a medium access control (MAC) layer. The RRC message is transmitted as an RRC protocol data unit (PDU), and a common control channel (CCCH), a dedicated control channel (DCCH), a paging control channel (PCCH), a broadcast control channel (BCCH), or a multicast control channel (MCCH) is used as a logical channel (LCH) to be mapped. The MAC CE is transmitted as a MAC PDU (or MAC subPDU). The MAC subPDU is equivalent to a service data unit (SDU) of the MAC layer with, for example, an 8-bit header added thereto, and the MAC PDU includes one or more MAC subPDUs.

### <Terminal Apparatus>

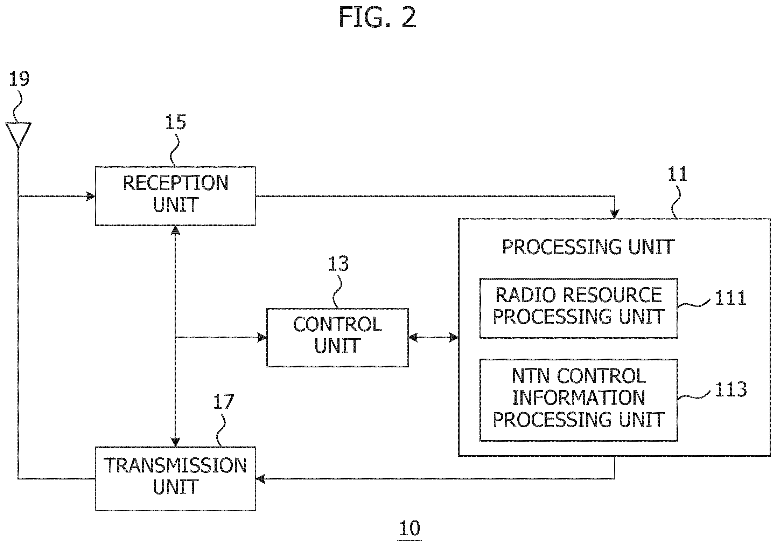

FIG. 2 illustrates an example of a functional configuration of the terminal apparatus 10 according to the embodiment. As illustrated in FIG. 2, the terminal apparatus 10 includes a processing unit 11, a control unit 13, a reception unit 15, a transmission unit 17, and a transmission/reception antenna unit 19, for example. The processing unit 11 is configured to include a radio resource processing unit 111 and an NTN control information processing unit 113, for example. The functional configuration illustrated in FIG. 2 is merely exemplary, and the functional categories and the names of the functional blocks may be different as long as the operation according to the embodiment can be executed.

The processing unit 11 generates, for example, control information for controlling the reception unit 15 and the transmission unit 17, and outputs the control information to the control unit 13. The processing unit 11 executes processing related to, for example, a radio resource control layer, a packet data convergence protocol layer, a radio link control layer, and a medium access control layer.

The radio resource processing unit 111 manages various configuration information (RRC parameters, information element (IE)) of the terminal apparatus 10. For example, the radio resource processing unit 111 generates information which is disposed in each channel of physical uplink, and outputs the information to the transmission unit 17.

The NTN control information processing unit 113 performs a set of control processing related to the NTN. For example, the NTN control information processing unit 113 executes measurement of serving cells and neighboring cells, start and stop of the transmission/reception processing, a DL synchronization procedure (cell search), a UL synchronization procedure (random access procedure), reacquisition of system information, event evaluation related to handover, a set of processing related to handover, and the like, on the basis of an instruction from the radio resource processing unit 111 or an instruction from the base station apparatus 20.

The control unit 13 performs various controls in the terminal apparatus 10. For example, the control unit 13 generates a control signal or control data for controlling the reception unit 15 and the transmission unit 17 on the basis of the control information from the processing unit 11. In addition, the control unit 13 controls radio communication with the base station apparatus 20 on the basis of information related to control of the feeder link and the service link.

The reception unit 15 separates, demodulates, and decodes various signals received from the base station apparatus 20 via the transmission/reception antenna unit 19 on the basis of the control signal given from the control unit 13. The reception unit 15 delivers the decoded information to the processing unit 11.

The transmission unit 17 generates, for example, a physical uplink signal on the basis of the control signal given from the control unit 13, and encodes and modulates the physical uplink signal or the physical uplink channel given from the processing unit 11. The transmission unit 17 multiplexes various signals and transmits the signals to the base station apparatus 20 via the transmission/reception antenna unit 19.

The processing unit 11 and the control unit 13 are realized by, for example, a processor system including a processor and a memory. In this case, the processor provides the functions of the processing unit 11 and the control unit 13 by executing a program describing the operation of the terminal apparatus 10 described later. In addition, the processing unit 11 and the control unit 13 may be realized by one processor system or by a plurality of processor systems. Alternatively, the processing unit 11 and the control unit 13 may be realized by a DSP, a hardware circuit, or the like.

### <Base Station Apparatus>

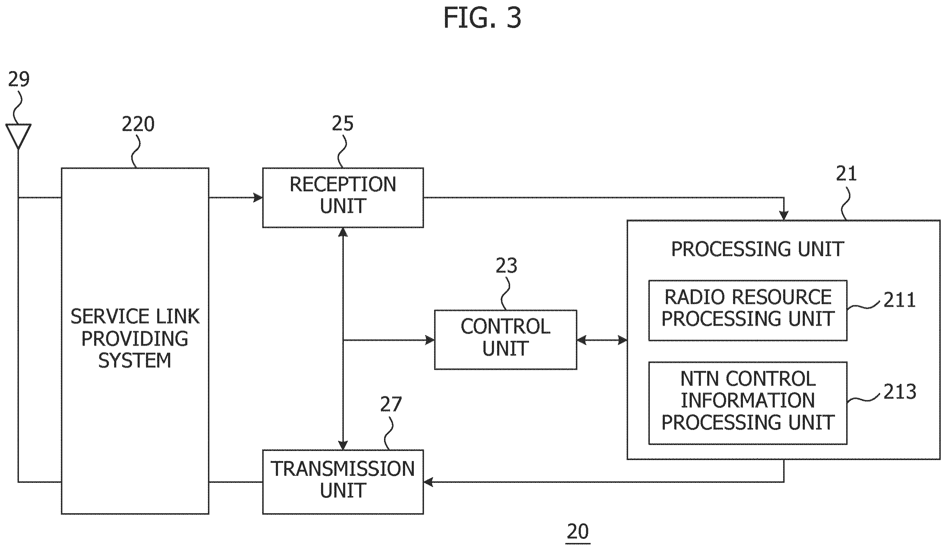

FIG. 3 illustrates an example of a functional configuration of the base station apparatus 20 according to the embodiment. As illustrated in FIG. 3, the base station apparatus 20 includes a processing unit 21, a control unit 23, a reception unit 25, a transmission unit 27, and a transmission/reception antenna unit 29, for example. The processing unit 21 is configured to include a radio resource processing unit 211 and an NTN control information processing unit 213, for example. In addition, as illustrated in FIG. 1, the base station apparatus 20 includes the service link providing system 220.

As illustrated in FIG. 1, the base station apparatus 20 also includes the gateway apparatus 230, which is not illustrated in FIG. 3. The gateway apparatus 230 may be logically configured in FIG. 3. In addition, the gateway apparatus 230 may be realized by some of the control unit 23, the reception unit 25, and the transmission unit 27. The functional configuration illustrated in FIG. 3 is merely exemplary, and the functional categories and the names of the functional blocks may be different as long as the operation according to the embodiment can be executed.

The processing unit 21 generates, for example, control information for controlling the reception unit 25 and the transmission unit 27, and outputs the control information to the control unit 23. The processing unit 21 executes processing related to, for example, a radio resource control layer, a packet data convergence protocol (PDCP) layer, a radio link control (RLC) layer, and a medium access control layer.

The radio resource processing unit 211 generates, for example, downlink data, an RRC message, or a MAC control element which is disposed in a physical downlink shared channel PDSCH, and outputs it to the transmission unit 27. In addition, the radio resource processing unit 211 generates a control signal or control data which is disposed in a physical downlink control channel PDCCH, and outputs it to the transmission unit 27. Furthermore, the radio resource processing unit 211 manages various configuration information of the terminal apparatus 10.

The NTN control information processing unit 213 performs a set of control processing related to the NTN. For example, the NTN control information processing unit 213 executes start and stop of the transmission/reception processing, start of a UL synchronization procedure (random access procedure), update of system information, adjustment of a beam transmission angle, switching of the feeder link, switching of the gateway apparatus 230, pre-configuration of parameters related to cell configuration and measurement event types (measurement event IDs) related to handover, prediction of cell arrival, and the like, on the basis of an instruction from the radio resource processing unit 211 or a notification by a signal or an RRC message from the terminal apparatus 10.

The control unit 23 performs various controls in the base station apparatus 20. For example, the control unit 23 generates a control signal or control data that controls the reception unit 25 and the transmission unit 27 on the basis of the control information from the processing unit 21. In addition, the control unit 23 performs various controls on the gateway apparatus 230 and the service link providing system 220.

The reception unit 25 separates, demodulates, and decodes various signals received from the terminal apparatus 10 or the core network 30 via the transmission/reception antenna unit 29 on the basis of the control signal given from the control unit 23. The reception unit 25 outputs the decoded information to the processing unit 21.

The transmission unit 27 generates, for example, a downlink reference signal on the basis of the control signal given from the control unit 23. The transmission unit 27 performs encoding, modulation, multiplexing, and the like of the various information given from the processing unit 21 to transmit a signal to the terminal apparatus 10 via the transmission/reception antenna unit 29.

In addition, the transmission unit 27 transmits data to the terminal apparatus 10 or the core network 30. The transmission unit 27 transmits, for example, information related to control of the flying object 250 and the service link. The reception unit 25 receives data from the terminal apparatus 10 and the core network 30. The reception unit 25 receives, for example, information related to control of the flying object 250, the feeder link, and the service link.

The processing unit 21 and the control unit 23 are realized by, for example, a processor system including a processor and a memory. In this case, the processor provides the functions of the processing unit 21 and the control unit 23 by executing a program describing the operation of the base station apparatus 20 described later. In addition, the processing unit 21 and the control unit 23 may be realized by one processor system or by a plurality of processor systems. Alternatively, the processing unit 21 and the control unit 23 may be realized by a DSP, a hardware circuit, or the like.

### <NTN Cell>

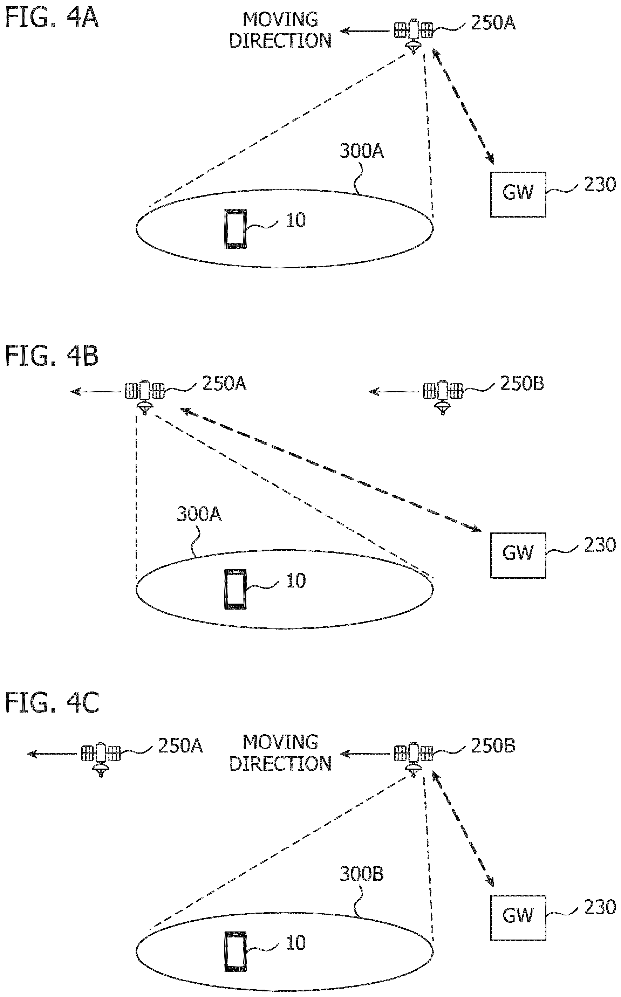

FIG. 4 illustrates an example of a communication area (cell) made by a flying object in non-terrestrial networks (NTN). A cell in the NTN is also referred to as an NTN cell. The terminal apparatus 10 may determine whether the cell to which the terminal apparatus 10 is connected is an NTN cell by the following method. That is, the terminal apparatus 10 may detect the NTN cell by the following method:
(1) the cell is detected in a frequency band assigned to the NTN;
(2) NTN-related information (SIB19) included in an RRC message (system information) is detected;
(3) SIB1 includes access restriction information for NTN; and
(4) comprehensive determination is made by any combination of (1), (2) and (3).

In FIG. 4, the flying object 250 (250A and 250B) relays a radio signal received from the ground station 210 and transmits the signal as a beam to the ground. The terminal apparatus 10 considers an area in which the signal (beam) transmitted from the flying object 250 can be received as a "serving cell". In the example illustrated in FIG. 4, a cell 300A is a serving cell for the terminal apparatus 10. Here, in a case where the flying object 250 is a so-called non-geostationary orbit satellite (NGSO: non-geostationary satellite orbit) (also referred to as an orbiting satellite) such as a low earth orbit satellite (LEO: low earth orbit) or a middle earth orbit satellite (MEO: middle earth orbit), the flying object 250 moves at a high speed in a substantially constant direction with respect to the ground surface.

For example, as illustrated in FIG. 4, the flying object 250A moves. In this case, the cell formed by the beam from the flying object 250A is configured not to move from the target area by using a technique such as beamforming. Such an NTN cell is called a quasi-earth fixed cell. The flying object 250A communicates with the gateway apparatus 230 via the feeder link.

As illustrated in FIGS. 4A and 4B, when the flying object 250A stays above the terminal apparatus 10, the serving cell of the terminal apparatus 10 is a cell 300A formed by the flying object 250A. Thereafter, it is assumed that the flying object 250A passes over the terminal apparatus 10 and the next flying object 250B is positioned above the terminal apparatus 10. That is, the terminal apparatus 10 can communicate with the flying object 250B. In this case, cell switching is performed. That is, as illustrated in FIG. 4C, the serving cell of the terminal apparatus 10 is switched from the cell 300A to a cell 300B formed by the flying object 250B. In this case, the flying object 250B communicates with the gateway apparatus 230 via the feeder link.

As described above, in the NTN system (in particular, NGSO) using satellites, since a serving cell or a cell used in communication is switched along with the movement of the satellite, the current cell may become unavailable over time even if the terminal apparatus 10 is stationary. Therefore, the base station apparatus 20 needs to notify the terminal apparatus 10 of a time or a time zone (that is, a time or a time zone in which the terminal apparatus 10 can communicate with the base station apparatus 20 via the flying object 250) in which the flying object 250 passes over the terminal apparatus 10 in advance. Therefore, in the NTN system, the base station apparatus 20 notifies the terminal apparatus 10 of the time information included in the system information for NTN. The terminal apparatus 10 manages measurement timings of the serving cell or the neighboring cell on the basis of the time information, and performs the measurement at appropriate timings. The base station apparatus 20 transmits a set of information corresponding to the satellite communication to the terminal apparatus 10 using, for example, a system information block type 19 (SIB19). The system information (SIB19) for NTN can also notify the terminal apparatus 10 of orbit information (ephemeris information) of the non-geostationary orbit satellite, an overflight stay time (uplink validity time, UL validity time), and uplink adjustment value (common timing advance (common TA)).

Here, in general, in a case where the cell to which the terminal apparatus 10 is connected is switched, synchronization timings of uplink and downlink for the terminal apparatus 10 and corresponding information included in the SIB19 are changed. Therefore, the base station apparatus 20 assigns different cell IDs to the switching source cell and the switching destination cell, and allocates a temporary ID (C-RNTI: cell-radio network temporary identifier) for identifying the terminal apparatus 10 in the cell. Furthermore, the terminal apparatus 10 performs a cell change procedure by a cell reselection procedure or a handover procedure.

In the NTN system, when being connected (accessed) to the base station apparatus 20 via the flying object 250, the terminal apparatus 10 acquires a synchronization signal/physical broadcast channel block SSB (SS/PBCH block) and adjusts downlink synchronization using the SSB. The SSB includes a synchronization signal and a physical broadcast channel (PBCH). In addition, the synchronization signal includes a primary synchronization signal (PSS) and a secondary synchronization signal (SSS).

The terminal apparatus 10 adjusts uplink synchronization using a common timing advance (common TA) and a dedicated timing advance (TA). The common timing advance can be obtained from the SIB19. The dedicated timing advance is notified in a dedicated manner by a random access response from the base station apparatus 20 in the random access procedure. The uplink synchronization is considered as a valid while a timing advance timer (TA timer) is running. In addition, the validity of the uplink synchronization is also managed by an uplink validity time (UL validity time).

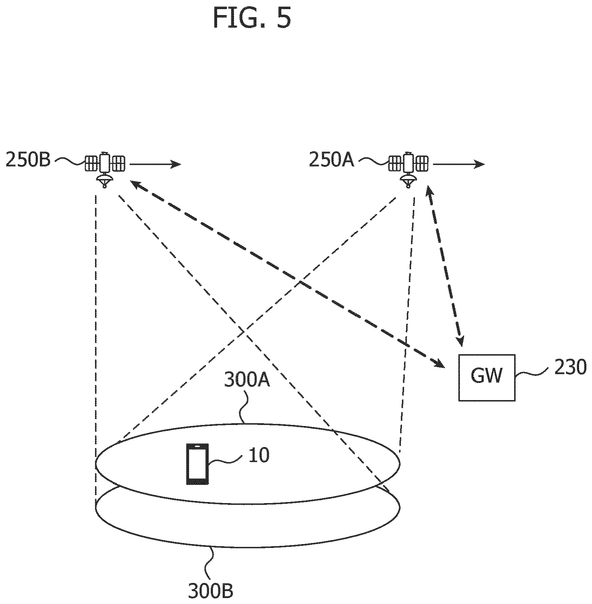

FIG. 5 illustrates an example of a scenario in which the gateway apparatus is not changed during cell switching. In the example illustrated in FIG. 5, switching is performed from the cell 300A formed by the flying object 250A to the cell 300B formed by the flying object 250B. In this case, since the distance between the terminal apparatus 10 and the flying object 250A and the distance between the terminal apparatus 10 and the flying object 250B are different from each other, the terminal apparatus 10 needs to adjust the transmission/reception timings in case of the cell switching. That is, the terminal apparatus 10 needs to adjust synchronization of the uplink/downlink after the cell switching. In addition, the terminal apparatus 10 establishes a radio link on the basis of the RRC parameters corresponding to the cell to which the terminal apparatus 10 is connected. In a case where the cell 300A and the cell 300B provide the same frequency band, it is not necessary (important) to change the RRC parameters related to the radio connection in the terminal apparatus 10. Note that the same frequency band means that configurations of the center frequency, the bandwidth, and the symbol length are the same.

Therefore, in a case where the cell 300A and the cell 300B provide the same frequency band, cell switching can be realized without execution of handover by assigning the same ID (that is, PCI) to the cell 300A and the cell 300B. That is, it is necessary (important) to reconfigure the transmission/reception timings, but it is not necessary (important) to reacquire the RRC parameters from a new cell. In a case where the cell before the switching and the cell after the switching have different IDs, the terminal apparatus 10 acquires new radio resource information from the cell after the switching, and establishes a radio link according to the new radio resource information.

Embodiments of the present invention will be described with reference to the drawings in consideration of the above-described points. In the description of the embodiment of the present invention, in a case where a specific description of known functions and configurations related to the embodiment of the present invention makes the gist of the embodiment of the present invention unclear, the detailed description thereof will be omitted.

### <First Embodiment>

In the following description, in a case where it is necessary (important) to update (change) the information related to the cell to which the terminal apparatus 10 is connected with the change of the flying object 250 (that is, change of the service link), the change of the gateway apparatus 230 (that is, change of the feeder link), or the change of the flying object 250 and the gateway apparatus 230, it is assumed that the cell before the update and the cell after the update have the same physical cell ID. The update (change) of the cell without the handover procedure is also referred to as cell switching (cell switch).

When cell switching with the same physical cell ID (PCI) is possible, the terminal apparatus according to the first embodiment executes a downlink resynchronization procedure and an uplink resynchronization procedure for the cell after the switching on the basis of the information received from the cell before the switching.

The base station apparatus according to the first embodiment provides, to the terminal apparatus capable of executing cell switching with the same physical cell ID (PCI), necessary (important) information to enable the downlink resynchronization procedure and the uplink resynchronization procedure to be performed at appropriate timings, respectively.

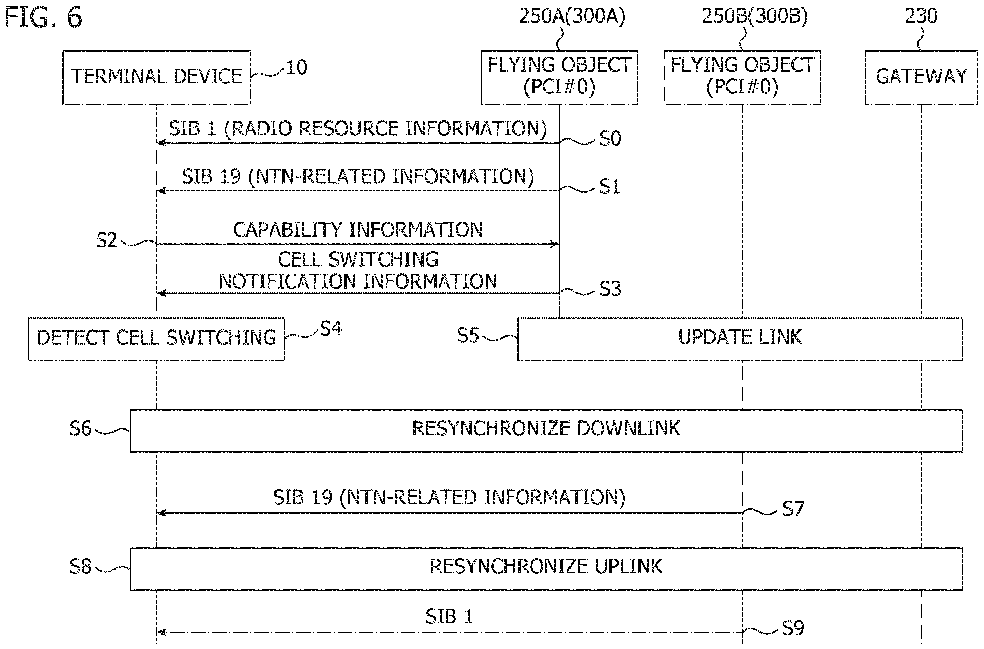

FIG. 6 illustrates an example of a sequence related to the cell switching in a non-terrestrial network system. In this example, the terminal apparatus 10 communicates with the base station apparatus 20 including the flying object 250A and the gateway apparatus 230 in a connected mode (connection mode, in communication). In addition, it is assumed that the gateway apparatus 230 can also operate as a different base station apparatus 20 by communication with the flying object 250B.

When switching the radio link with the terminal apparatus 10 from a state in which it is via the flying object 250A to a state in which it is via the flying object 250B, the base station apparatus 20 assigns the same physical cell ID (PCI#0) to the cell (300A) formed by the flying object 250A and the cell (300B) formed by the flying object 250B. In the following description, the communication area or cell formed by the flying object 250A may be referred to as a first cell, and the communication area or cell formed by the flying object 250B may be referred to as a second cell. In addition, the physical cell ID (PCI) may be simply referred to as a "cell ID".

In S0, when being connected (accessed) to the base station apparatus 20 of the NTN system via the flying object 250A, the terminal apparatus 10 acquires a synchronization signal/physical broadcast channel block SSB to adjust downlink synchronization with the first cell. In addition, the terminal apparatus 10 acquires synchronization timer information and common channel configuration information as system information from at least information informed by a system information block type 1 (SIB1). That is, the terminal apparatus 10 acquires radio resource information in the first cell. The radio resource information may include information indicating a frequency used between the terminal apparatus 10 and the flying object 250, information indicating transmission power of signals, and the like. The terminal apparatus 10 may confirm the presence or absence of access restriction on the basis of the system information.

In S1, the terminal apparatus 10 acquires cell-related information related to the flying object from the information informed by SIB19 using an RRC message. In this example, the SIB19 includes NTN-related information (referred to as first NTN-related information) which is necessary (important) for non-terrestrial communication, such as trajectory information and overflight stay time information of the flying object forming the NTN cell. Although omitted in the drawings, in a case where the procedure of radio connection (RRC setup) between the terminal apparatus 10 and the base station apparatus 20 is completed, the state of the terminal apparatus 10 shifts to an in-communication state (also referred to as an RRC connected state).

After completion of the radio connection procedure, the terminal apparatus 10 generates an RRC message (UE capability message) to notify the base station apparatus 20 of the radio capability of the terminal apparatus in S2. The RRC message is transmitted using a service link via the flying object 250A. In addition, the RRC message includes information indicating that the terminal apparatus 10 can operate in the NTN system and information indicating that the terminal apparatus 10 supports a cell switching procedure corresponding to the same cell ID. The information indicating that the cell switching procedure corresponding to the same cell ID is supported may notify whether it is supported per frequency band, or notify whether it is supported for all NTN frequency bands in which the terminal apparatus 10 supports.

At a timing when the connection destination of the terminal apparatus 10 is switched from the flying object 250A to the flying object 250B, that is, at a timing when the cell used for communication is changed from the first cell to the second cell, the base station apparatus 20 transmits identification information (indication) indicating the occurrence of the cell switching to the terminal apparatus 10 via the flying object 250A in S3. The identification information indicating the occurrence of the cell switching is realized by, for example, an identifier of one or more bits included in the physical downlink control channel PDCCH. In this case, the information included in the PDCCH may be explicitly indicated using downlink control information DCI, or may be implicitly indicated by applying a new DCI format. In addition, the identification information indicating the occurrence of the cell switching may be realized by information notified by the MAC control element or by information (information element) included in the RRC message or the RRC message itself. In the following description, the identification information indicating the occurrence of the cell switching may be referred to as "cell switching notification information".

The cell switching notification information may include at least one of information indicating cell switching corresponding to the same cell ID, information indicating reacquisition of uplink synchronization/downlink synchronization (resynchronization or readjustment), information indicating reacquisition of the SIB19, or a cell ID for identifying a switching destination cell (second cell). The cell switching notification information is represented by, for example, an identifier of one bit. In this case, for example, a configuration to which the same cell ID is assigned is represented by "1", and a configuration to which a different cell ID is assigned is represented by "0". In addition, the format of the cell switching notification information is not particularly limited as long as it is possible to explicitly or implicitly notify the terminal apparatus 10 that the cell ID will not be changed. For example, the cell switching notification information may be in the form of a list including a plurality of cell IDs, or may be range information including a start number and the number of cell IDs that will not be changed.

The cell switching notification information may include time information indicating a time related to the cell switching. In this case, the time information may indicate a valid time of the first cell or a time when the second cell becomes valid. In addition, the unit (for example, slots, frames, milliseconds, or the like) of the time information may be configured in advance or may be instructed every time the cell switching notification information is transmitted.

The cell switching notification information may include a dedicated preamble which is used in the cell after switching (that is, second cell). In this case, the PDCCH may transmit a DCI format (DCI format 1_0) indicating the start of the random access procedure. In a case where the dedicated preamble is notified, the terminal apparatus 10 preferably stores information of the notified dedicated preamble instead of starting the random access procedure immediately after receiving the PDCCH, and performs the random access procedure for the second cell after the cell switching is completed. In addition, when receiving the cell switching notification information, the terminal apparatus 10 may stop the timing with a protection timer (UL validity timer) for the uplink validity time.

The base station apparatus 20 may notify a plurality of the terminal apparatuses 10 of a plurality of the dedicated preambles using a PDCCH and/or a PDSCH identified by a group RNTI (G-RNTI) allocated to the plurality of grouped terminal apparatuses 10. In addition, the base station apparatus 20 may notify a plurality of the terminal apparatuses 10 of a plurality of the dedicated preambles, respectively, by including the dedicated preambles in one shared RRC message.

In S4, the terminal apparatus 10 detects, on the basis of the above information, that the cell switching has occurred and that the cell IDs of the first cell and the second cell are the same. When detecting that the cell switching has occurred, the terminal apparatus 10 cancels or suspends various procedures (for example, random access, scheduling request (SR), power headroom report (PHR), buffer status report (BSR)) triggered at that time. In addition, in a case where uplink transmission (including performing the random access) is triggered by the PDCCH or upper layer before the start of the cell switching, the terminal apparatus 10 also suspends the transmission procedure thereof. In a case where there is suspended uplink transmission, the terminal apparatus 10 resumes (resumes) the transmission procedure thereof after the cell switching (that is, after S8 described later).

On the network side, the cell connected to the terminal apparatus 10 is updated in S5 after the cell switching notification information is transmitted as described above. The update of the cell is executed with (1) the change of the service link, (2) the change of the feeder link, or (3) the change of the service link and the feeder link. FIG. 6 illustrates an example in which the gateway apparatus 230 is not changed during cell switching, but the gateway apparatus 230 may be changed during cell switching.

When it is detected that the cell switching to the second cell has occurred, if the downlink data received in the first cell is stored in a buffer, the terminal apparatus 10 may continue to store the data without clearing the buffer. In addition, since the cell switching is considered not as handover but as timing change in the same cell, the terminal apparatus 10 does not reset the MAC layer. That is, the parameters of the MAC layer configured in the first cell are reused in the second cell. In a case where the uplink data scheduled to be transmitted in the first cell is stored in the buffer, the terminal apparatus 10 may clear the buffer.

In S6, the terminal apparatus 10 acquires synchronization of the downlink of the second cell (resynchronization or readjustment). Specifically, the terminal apparatus 10 starts receiving a synchronization signal/physical broadcast channel block SSB of the second cell on the basis of the cell switching time, and adjusts a downlink timing on the basis of the timing information. In this case, the terminal apparatus 10 adjusts the downlink timing of the second cell by receiving the SSB in the second cell using the radio resource information acquired in the first cell. In addition, the timing to start the acquisition of the synchronization of the downlink of the second cell may be determined on the basis of the cell switching notification information received from the first cell or on the basis of the UL validity time included in the system information received from the first cell.

The terminal apparatus 10 may perform the following control on the basis of the switching timing of the link with the flying object 250. The terminal apparatus 10 may stop each of the downlink reception processing, the quality measurement processing, and the synchronization timing adjustment processing for the first cell at a reception end timing of the first cell, and start each of the downlink reception processing, the quality measurement processing, and the synchronization timing adjustment processing for the second cell at a reception start timing of the second cell. In this case, the terminal apparatus 10 uses the cell configuration information (radio resource control information, RRC control information, and the like) assigned in a dedicated manner in the first cell as is in the downlink resynchronization. That is, the terminal apparatus 10 maintains the radio resource information acquired from the system information of the first cell and reuses the radio resource information in the synchronization of the downlink of the second cell. In addition, the terminal apparatus 10 may retune the RF device (reception unit 15) to perform the resynchronization with the downlink reception frequency of the second cell on the basis of the radio resource information acquired in the first cell.

The terminal apparatus 10 may stop filtering (L3 filtering) processing for averaging/smoothing the measurement results at the end of reception timing of the first cell, reset the filtering value, and restart the filtering processing from the beginning when the measurement of the second cell is started. In this case, the terminal apparatus 10 may perform the filtering in the second cell on the basis of the cell configuration information configured from the first cell. In this case, the parameters for averaging/smoothing the measurement results are reused. In addition, reset of the measurement or the measurement values may be performed only for the same cell ID, and the measurement result in a cell other than the serving cell (first cell) may be maintained.

In the cell switching, the terminal apparatus 10 may cancel the trigger related to the measurement event configured for the first cell or invalidate the measurement event. Alternatively, the terminal apparatus 10 may reset the timer related to the measurement event configured for the first cell. The terminal apparatus 10 may store a timer and/or a measurement result of the measurement event (for example, event A4) in which the cell ID of the serving cell (first cell) is not configured as the target cell (suitable cell, applicable cell).

The terminal apparatus 10 may temporarily stop (suspend) the uplink transmission at the end of reception timing of the first cell. Regarding the temporary stop of the uplink transmission, a round trip time (RTT) for uplink transmission data may be taken into consideration. That is, in a case where it is determined that a response signal HARQ for the uplink transmission cannot be (is not) received, the terminal apparatus 10 may temporarily suspend the uplink transmission before the end of reception timing of the first cell. In addition, during the temporary stop of the uplink transmission, the terminal apparatus 10 may stop the timing with the timing advance timer (TA timer) for the uplink or consider the timer to have expired. Similarly, the terminal apparatus 10 may stop the timing with a timing advance report (TA report) timer (TAR timer) or consider the timer to have expired.

After completion of the synchronization of the downlink (resynchronization), the terminal apparatus 10 acquires SIB19 from the second cell in S7. The SIB19 acquired from the second cell includes information related to the flying object (flying object 250B in FIG. 5) forming the second cell. Meanwhile, in this example, the cell configuration information (radio resource control information, RRC control information) of the first cell is the same as that of the second cell. Therefore, the terminal apparatus 10 does not need to newly acquire and apply the cell configuration information (radio resource control information, RRC control information) from the SIB1 during the cell switching. That is, the terminal apparatus 10 can reuse the cell configuration information assigned in a dedicated manner in the first cell for the second cell.

The terminal apparatus 10 acquires NTN-related information (referred to as second NTN-related information) from the SIB19 of the second cell. The terminal apparatus 10 that has acquired the second NTN-related information starts the random access procedure and/or the timing with the protection timer (UL validity timer) for the uplink validity time. The protection timer for the uplink validity time may start the timing when the acquisition of the second NTN-related information is completed, or at a time when the second cell becomes valid, which is notified by the cell switching notification information. In a case where the acquisition of the SIB19 of the second cell fails, the terminal apparatus 10 may determine that a radio link failure has occurred.

In S8, the terminal apparatus 10 starts the random access procedure for the switching destination cell (that is, second cell) and acquires synchronization of the uplink (resynchronization or readjustment). Specifically, for example, the terminal apparatus 10 starts the random access procedure at a time when the UL validity timer is running and the uplink is considered as valid. In this case, the terminal apparatus 10 uses the cell configuration information assigned in a dedicated manner in the first cell as is in the uplink resynchronization. That is, the terminal apparatus 10 maintains the radio resource information acquired from the system information of the first cell and reuses the radio resource information in the synchronization of the uplink of the second cell. Here, the random access procedure includes both a two-step random access procedure and a four-step random access procedure of the related art. The terminal apparatus 10 starts the random access procedure for the second cell on the basis of the random access configurations configured in the first cell.

In the acquisition of the uplink synchronization, the terminal apparatus 10 may use a common timing advance obtained from the second NTN-related information. In a case where cell switching with the same cell ID is performed, the terminal apparatus 10 may consider the information (for example, common timing advance) related to the uplink timing to have the same configured value in the first NTN-related information and the second NTN-related information and start the random access procedure without waiting for completion of the reception of the second NTN-related information.

The random access procedure is started, for example, after the terminal apparatus 10 receives the second NTN-related information and the timing with the UL validity timer is restarted in the terminal apparatus 10. Here, in a case where a dedicated preamble is assigned as the radio resource information in the first cell, the terminal apparatus 10 performs the random access procedure using the dedicated preamble. In addition, when no dedicated preamble is assigned in the first cell, the terminal apparatus 10 selects an arbitrary preamble from a collision-based (contention-based) preamble group and performs the random access procedure using the selected preamble. Then, when the random access procedure succeeds, the terminal apparatus 10 determines that the uplink synchronization has been completed. In addition, when the random access procedure has succeeded, the terminal apparatus 10 uses the C-RNTI allocated to the terminal apparatus 10 in the first cell as is in the second cell.

The terminal apparatus 10 may start the protection timer simultaneously with the reception of the cell switching notification information (S3), the start of the downlink synchronization (S6), or the start of the uplink synchronization (S8). In addition, the terminal apparatus 10 may start different protection timers for S3, S6, and S8. The protection timer may be an RRC timer managed by an RRC layer or an L2 timer managed by a MAC layer. The protection timer may be designated by the system information of the first cell or by dedicated cell configurations configured in the first cell, or may be a fixed value uniquely designated in the system. With the start of the protection timer, the terminal apparatus 10 may stop various RRC timers (for example, downlink synchronization protection timer T310) started in the first cell.

When the protection timer expires, the terminal apparatus 10 determines, for example, that reacquisition of the synchronization has failed in the second cell. In this case, the terminal apparatus 10 may determine that (1) a handover failure (HOF) or (2) a radio link failure (RLF) has occurred. Alternatively, the terminal apparatus 10 may (3) determine that the synchronization state has shifted to an asynchronous state in the second cell, stop the uplink transmission, and perform a downlink resynchronization procedure. In addition, the terminal apparatus 10 may stop the timing advance timer (TA timer) for the uplink or consider the timer to have expired. An instruction may be indicated in advance from the base station apparatus 20 to the terminal apparatus 10 regarding the determinations (1) to (3) described above. In addition, in a case where the UL validity timer expires before the random access procedure succeeds, the terminal apparatus 10 preferably stops the uplink transmission.

After the resynchronization of the downlink and the uplink is completed, the terminal apparatus 10 attempts to acquire a SIB1 including cell access information from the second cell in S9. When acquiring (reacquiring) the SIB1 of the second cell, the terminal apparatus 10 replaces part or all of the SIB1 information acquired from the first cell with the SIB1 information acquired from the second cell. For example, the terminal apparatus 10 replaces the values of the RRC timer information (RRC setup procedure timer T300, RRC reconnection procedure timer T301, downlink synchronization protection timer T310, and the like) for the cell.

Through the above-described procedure, the terminal apparatus 10 can be connected (reconnected) to a different NTN cell to which the same physical cell ID as that of the serving cell is assigned. That is, the terminal apparatus 10 can be connected to a new NTN cell without performing a handover procedure accompanying a change of the NTN cell (link with a satellite).

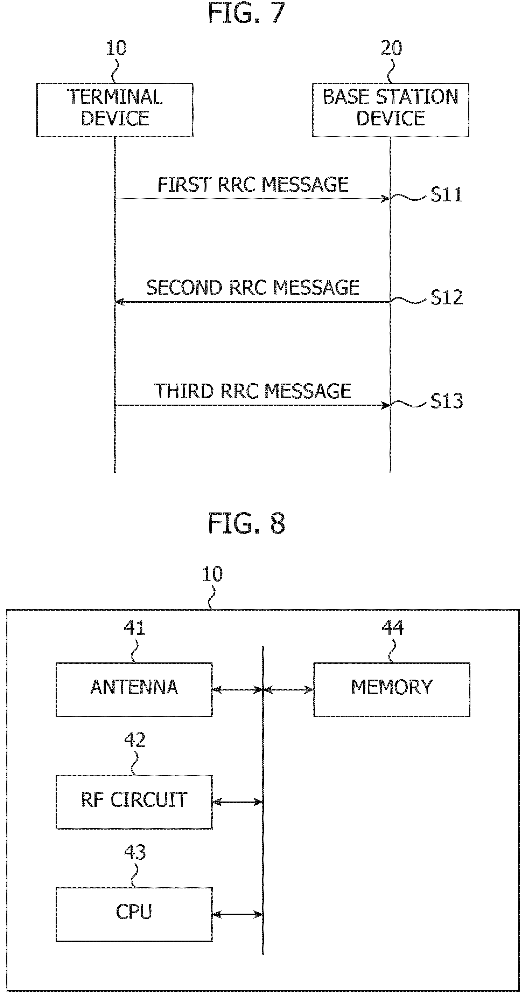

FIG. 7 illustrates an example of a sequence of transmitting the cell switching notification information using the RRC message. This sequence corresponds to S3 illustrated in FIG. 6, for example. The terminal apparatus 10 is connected to the base station apparatus 20 of the NTN system. As illustrated in FIG. 1, the base station apparatus 20 includes the flying object 250 and the gateway apparatus 230.

In S11, the terminal apparatus 10 transmits a first RRC message to the base station apparatus 20 to request the start of a new RRC procedure. The first RRC message is, for example, an RRCSetupRequest message or an RRCReestablishmentReqest message. The first RRC message may include identification information indicating that cell switching with the same cell ID can be performed. The terminal apparatus 10 may transmit a first RRC message including the above-described identification information to the base station apparatus 20 in a case where the system information of the first cell notifies that the cell switching with the same cell ID is supported.

In S12, the base station apparatus 20 transmits a second RRC message to the terminal apparatus 10 as a response to the first RRC message. The second RRC message is, for example, an RRCSetup message or an RRCReestablishment message. The second RRC message may include identification information indicating that cell switching with the same cell ID is performed in the cell. In addition, the second RRC message may include identification information indicating that the terminal apparatus 10 is permitted to perform the cell switching with the same cell ID in the cell. Alternatively, the second RRC message may include identification information inquiring of the terminal apparatus 10 whether it is possible to perform the cell switching with the same cell ID in the cell.

In S13, the terminal apparatus 10 transmits a third RRC message to the base station apparatus 20 as a response to the second RRC message. The third RRC message is, for example, an RRCSetupComplete message or an RRCReestablishmentComplete message. In this case, in response to the second message, the terminal apparatus 10 may include, in the third RRC message, identification information indicating that the cell switching with the same cell ID can be performed or identification information indicating that the cell switching with the same cell ID cannot be (is not) performed (is not supported). Alternatively, the terminal apparatus 10 may transmit a third RRC message including the above-described identification information to the base station apparatus 20 in a case where the system information of the first cell notifies that the cell switching with the same cell ID is supported.

The first RRC message may be omitted in the sequence illustrated in FIG. 7. That is, a procedure may be provided in which the second RRC message and the third RRC message are transmitted between the terminal apparatus 10 and the base station apparatus 20. In this case, the second RRC message and the third RRC message are, for example, an RRCReconfiguration message and an RRCReconfigurationComplete message, respectively. In a case where the RRCReconfigurationComplete message is used, the base station apparatus 20 may notify the terminal apparatus 10 of the occurrence of the cell switching with the same cell ID and the cell switching time by using a condition event T1 (CondEvent-T1). In this case, in a case where a suitable cell for the condition event T1 shows the same cell ID as that of the serving cell, the time when the condition event T1 is established indicates the time of cell switching timing.

In this way, according to the first embodiment, the terminal apparatus 10 and the base station apparatus 20 can execute the downlink resynchronization procedure and the uplink resynchronization procedure at appropriate timings, respectively, in the cell switching with the same physical cell ID (PCI). In this case, the terminal apparatus 10 can perform timing resynchronization in the new cell by using the radio resource information acquired in the old cell. That is, the terminal apparatus 10 does not need to acquire the radio resource information from the new cell in the cell switching. Therefore, since the control information to be transmitted in the cell switching is reduced, it is possible to efficiently perform the mobility control in the NTN system.

### <Second Embodiment>

A second embodiment will be described. A description of configurations, functions, or procedures common to the first embodiment and the second embodiment will be omitted. That is, differences from the first embodiment will be mainly described below.

When reacquiring the uplink timing (resynchronization or readjustment), the terminal apparatus 10 according to the second embodiment determines whether to start the random access procedure on the basis of whether the uplink transmission in the second cell is continued in the terminal apparatus 10.

For example, in the first cell, in a case where untransmitted uplink data remains in the buffer of the terminal apparatus 10, the uplink data is preferably transmitted immediately. In this case, the terminal apparatus 10 starts the random access procedure for the second cell in the switching sequence from the first cell to the second cell. On the other hand, in a case where no untransmitted uplink data remains in the first cell, the terminal apparatus 10 may not (does not) start the random access procedure. In addition, when a timer (for example, data inactivity timer) for determining whether untransmitted uplink data is generated in the terminal apparatus 10 does not expire, the terminal apparatus 10 may start the random access procedure for the second cell. However, when the timer expires, the terminal apparatus 10 may not (does not) start the random access procedure. In addition, in a case where the most recent uplink data transmission (transmission using PUSCH) occurs within a certain period of time, the terminal apparatus 10 may start the random access procedure.

In the NTN system, cell switching is likely to occur simultaneously for a large number of terminal apparatuses. Here, according to the second embodiment, only a terminal apparatus that needs to immediately transmit the uplink data executes the random access procedure for the new cell. Therefore, congestion of radio resources during cell switching is alleviated.

The presence or absence of the untransmitted uplink data may be determined on the basis of whether the UL validity timer has expired, for example. In this case, when the timer does not expire, it is determined that there is transmission data. In addition, the presence or absence of the untransmitted uplink data may be determined on the basis of the time information notified from the base station apparatus 20. In this case, if data transmission is scheduled after the notified time, it is determined that there is transmission data. Alternatively, the base station apparatus 20 may notify the terminal apparatus 10 of whether to perform the random access procedure. The notification may be realized using one bit of a PDCCH or a MAC CE. In addition, system information may be used to notify all the terminal apparatuses in the cell, or a dedicated RRC message may be used for configuration for each terminal apparatus 10.

In a case where the random access procedure is started, the terminal apparatus 10 may use a collision-based random access preamble. In a case where the random access procedure is not performed, the terminal apparatus 10 completes the cell switching in a state in which the uplink is asynchronous, without performing resynchronization of the uplink timing with respect to the second cell. In this case, the terminal apparatus 10 may stop the timing advance timer (TA timer) being timing or determine that the timer has expired. In addition, the terminal apparatus 10 may stop the timing with a timing advance report (TA report) timer (TAR timer) or consider the timer to have expired.

In a case where the collision-based random access procedure is performed, the terminal apparatus 10 may consider an offset time for randomizing a performing timing to achieve a lower probability of the collision. The offset time may be notified from the base station apparatus 20 or randomly determined by the terminal apparatus 10. For example, a value range may be specified on the basis of the system information of the first cell or the second cell. In addition, the offset time may be calculated by a calculation formula including an ID (for example, C-RNTI) allocated to the terminal apparatus 10.

The terminal apparatus 10 may perform the random access procedure in a case where neither the event configurations (for example, measurement event A3) related to the handover nor the conditional handover configurations are configured. In addition, the base station apparatus 20 may explicitly or implicitly instruct (notify) the terminal apparatus 10 to perform the cell switching without performing the random access procedure. That is, in a case where the base station apparatus 20 does not cause the terminal apparatus 10 to perform the random access procedure in the cell switching, it is guaranteed that the event configurations related to the handover and/or the conditional handover configurations are not configured. In other words, the terminal apparatus 10 may perform the random access procedure in a case where the base station apparatus 20 notifies the terminal apparatus 10 of the cell switching with the same cell ID in a state in which the event configurations related to the handover and/or the conditional handover configurations are not configured.

In this way, according to the second embodiment, it is determined whether to execute the uplink resynchronization procedure (for example, random access procedure) on the basis of the necessity of the uplink transmission of the terminal apparatus 10 in the cell switching with the same physical cell ID (PCI). That is, the terminal apparatus with low urgency does not perform the uplink resynchronization procedure. Therefore, the mobility control in the NTN system can be efficiently performed.

In addition, according to the first and second embodiments, in non-terrestrial networks, the terminal apparatus 10 and the base station apparatus 20 can perform optimal cell switching with the same physical cell ID (PCI). That is, in the non-terrestrial networks, it is possible to efficiently perform the mobility control in the radio communication between the terminal apparatus 10 and the base station apparatus 20.

### <Hardware Configurations of Apparatuses in Each Embodiment>

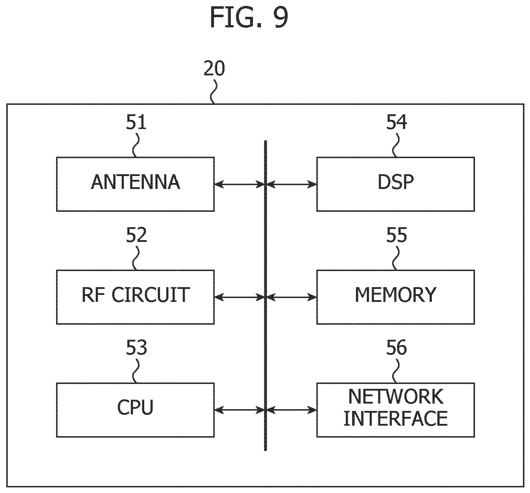

Hardware configurations of the apparatuses in the radio communication system according to each embodiment will be described with reference to FIGS. 8 and 9.

FIG. 8 illustrates an example of a hardware configuration of the terminal apparatus 10. As illustrated in FIG. 8, the terminal apparatus 10 has, for example, a radio frequency (RF) circuit 42 including an antenna 41, a central processing unit (CPU) 43, and a memory 44 as hardware components. The terminal apparatus 10 may have a display apparatus such as a liquid crystal display (LCD) connected to the CPU 43. The memory 44 includes, for example, at least one of a RAM such as a synchronous dynamic random access memory (SDRAM), a read only memory (ROM), and a flash memory, and stores programs, control information, and data signals.

The correspondence between the functional configuration of the terminal apparatus 10 illustrated in FIG. 2 and the hardware configuration of the terminal apparatus 10 illustrated in FIG. 8 will be described. The transmission unit 17 and the reception unit 15 are realized by the RF circuit 42, or by the antenna 41 and the RF circuit 42, for example. In addition, the control unit 13 and the processing unit 11 are realized by the CPU 43, the memory 44, and a digital electronic circuit (not illustrated), for example. Examples of the digital electronic circuit include an application specific integrated circuit (ASIC), a field-programmable gate array (FPGA), and a large scale integration (LSI).

FIG. 9 illustrates an example of a hardware configuration of the base station apparatus 20. As illustrated in FIG. 9, the base station apparatus 20 has, for example, an RF circuit 52 including an antenna 51, a CPU 53, a digital signal processor (DSP) 54, a memory 55, and a network interface (IF) 56 as hardware components. The CPU 53 is connected via a bus so that input and output of various signals and data signals are possible. The memory 55 includes, for example, at least one of a RAM such as a SDRAM, a ROM, and a flash memory, and stores programs, control information, and data signals. The CPU 53 and the DSP 55 may be collectively referred to as a processor.

The correspondence between the functional configuration of the base station apparatus 20 illustrated in FIG. 3 and the hardware configuration of the base station apparatus 20 illustrated in FIG. 9 will be described. The transmission unit 27 and the reception unit 25 are realized by the RF circuit 52, or by the antenna 51 and the RF circuit 52, for example. In addition, the control unit 23 and the processing unit 21 are realized by the CPU 53, the DSP 54, the memory 55, and a digital electronic circuit (not illustrated), for example. Examples of the digital electronic circuit include an ASIC, an FPGA, and an LSI. The hardware configuration of the base station apparatus 20 may be adapted to each of the ground station 210 and the NTN payload unit 240, for example.

The embodiments described above are for facilitating the understanding of the present invention, and are not intended to limit the present invention. The present invention can be modified and improved without departing from the spirit thereof, and includes equivalents thereof. For example, the "satellite" is not limited to only an artificial satellite, and may be a HAPS or another unmanned or manned aircraft.

### REFERENCE SIGNS LIST

10: TERMINAL APPARATUS
20: BASE STATION APPARATUS
30: CORE NETWORK
11, 21: PROCESSING UNIT
13, 23: CONTROL UNIT
15, 25: RECEPTION UNIT
17, 27: TRANSMISSION UNIT
19, 29: TRANSMISSION/RECEPTION ANTENNA UNIT
41, 51: ANTENNA
42, 52: RF CIRCUIT
43, 53: CPU
44, 55: MEMORY
54: DSP
56: NETWORK IF
111, 211: RADIO RESOURCE PROCESSING UNIT
113, 213: NTN CONTROL INFORMATION PROCESSING UNIT
210: GROUND STATION
220: SERVICE LINK PROVIDING SYSTEM
230: GATEWAY APPARATUS
240: NTN PAYLOAD UNIT
250 (250A-250B): FLYING OBJECT
300 (300A-300B): CELL

## Claims

1. A terminal apparatus capable of communicating with a first cell and a second cell in non-terrestrial networks, the terminal apparatus comprising:
a receiver which receives control information from the first cell when the terminal apparatus is connected to the first cell; and
a processor which executes, when the control information includes information indicating that switching from the first cell to the second cell occurs and information indicating that the first cell and the second cell have same physical cell IDs, resynchronization processing of downlink timing of the second cell and resynchronization processing of uplink timing of the second cell on a basis of information related to a radio resource included in the control information received from the first cell.

2. The terminal apparatus according to claim 1,
wherein, in the resynchronization processing of the uplink timing of the second cell, the processor executes, for the second cell, a random access procedure using a dedicated preamble included in the control information received from the first cell.

3. The terminal apparatus according to claim 2,
wherein the processor executes the resynchronization processing of the uplink timing when the terminal apparatus has untransmitted uplink data.

4. The terminal apparatus according to claim 2,
wherein, when the random access procedure is started, the processor starts timing with a timer for determining whether the random access procedure for the second cell has succeeded.

5. The terminal apparatus according to claim 1,
wherein the processor notifies, when the first cell and the second cell have the same physical cell IDs, a base station apparatus in the non-terrestrial networks of information indicating that it is possible to acquire resynchronization of the downlink timing of the second cell and resynchronization of the uplink timing of the second cell without executing a handover procedure from the first cell to the second cell.

6. The terminal apparatus according to claim 1,
wherein the processor determines that a cell to which the terminal apparatus is connected is a cell in the non-terrestrial networks when the receiver receives system information related to the non-terrestrial networks.

7. A base station apparatus which forms a first cell and a second cell in non-terrestrial networks, the base station apparatus comprising:
a receiver which receives, when the first cell and the second cell have same physical cell IDs, capability information from a terminal apparatus, the capability information indicating that it is possible to acquire resynchronization of downlink timing of the second cell and resynchronization of uplink timing of the second cell without executing a handover procedure from the first cell to the second cell;
a processor which generates, when switching from the first cell to the second cell occurs, control information indicating that the first cell and the second cell have the same physical cell IDs in order to cause the terminal apparatus to acquire the resynchronization of the downlink timing of the second cell and the resynchronization of the uplink timing of the second cell, without executing the handover procedure from the first cell to the second cell; and
a transmitter which transmits the control information to the terminal apparatus in response to the reception of the capability information by the receiver, and transmits, to the terminal apparatus, second control information indicating that the switching from the first cell to the second cell occurs.

8. The base station apparatus according to claim 7,
wherein the processor generates a message requesting transmission of the capability information, and
the transmitter transmits the message to the terminal apparatus.

9. The base station apparatus according to claim 7,
wherein, in resynchronization processing of uplink timing in the terminal apparatus, in order to perform a random access procedure using a dedicated preamble in the second cell, the processor notifies the dedicated preamble from the first cell to the terminal apparatus.

10. The base station apparatus according to claim 7,
wherein the processor notifies, from the first cell to the terminal apparatus, timer information for the terminal apparatus to determine whether the random access procedure for the second cell has succeeded.

11. A communication control method which is used in a terminal apparatus capable of communicating with a first cell and a second cell in non-terrestrial networks, the method comprising:
receiving control information from the first cell when the terminal apparatus is connected to the first cell; and
executing, when the control information includes information indicating that switching from the first cell to the second cell occurs and information indicating that the first cell and the second cell have same physical cell IDs, resynchronization processing of downlink timing of the second cell and resynchronization processing of uplink timing of the second cell on a basis of information related to a radio resource included in the control information received from the first cell.

12. A communication control method which is used in a base station apparatus which forms a first cell and a second cell in non-terrestrial networks, the method comprising:
receiving, from a terminal apparatus, when the first cell and the second cell have same physical cell IDs, capability information indicating that it is possible to acquire resynchronization of downlink timing of the second cell and resynchronization of uplink timing of the second cell without executing a handover procedure from the first cell to the second cell;
generating, when switching from the first cell to the second cell occurs, control information indicating that the first cell and the second cell have the same physical cell IDs in order to cause the terminal apparatus to acquire the resynchronization of the downlink timing of the second cell and the resynchronization of the uplink timing of the second cell, without executing the handover procedure from the first cell to the second cell;
transmitting the control information to the terminal apparatus in response to the reception of the capability information; and
transmitting, to the terminal apparatus, second control information indicating that the switching from the first cell to the second cell occurs.
